# EUROPÄISCHE PATENTSCHRIFT

(11) **EP 3 886 577 B1**
(45) Veröffentlichungstag und Bekanntmachung des Hinweises auf die Patenterteilung: **23.03.2022**
(21) Anmeldenummer: 19817947.5
(22) Anmeldetag: 07.11.2019
(51) Int. Cl.: A01K 61/95

(54) **SORTIERVORRICHTUNG FÜR LEBENDE FISCHE**
SORTING DEVICE FOR LIVE FISH
DISPOSITIF DE TRIAGE DE POISSONS VIVANTS

(30) Priorität: 29.11.2018 DE 102018130232
(43) Veröffentlichungstag der Anmeldung: 06.10.2021
(73) Patentinhaber: Alfred-Wegener-Institut Helmholtz-Zentrum für Polar- und Meeresforschung, 27570 Bremerhaven (DE)
(72) Erfinder: BÖGNER, Mirko, 27578 Bremerhaven (DE); WEISS, Monika, 27580 Bremerhaven (DE)
(86) Internationale Anmeldenummer: PCT/DE2019/100959
(87) Internationale Veröffentlichungsnummer: WO 2020/108690

(56) Entgegenhaltungen:
- CN-B- 104 137 796

## Beschreibung

Die Erfindung bezieht sich auf eine Sortiervorrichtung für lebende Fische mit einem nach oben offenen Wassertank und zumindest einer vertikalen Gittereinrichtung, die über ein umlaufendes Dichtelement an das Innere des Wassertanks angeschlossen ist und diesen in zwei voneinander getrennte Bereiche unterteilt und mehrere, von horizontalen und vertikalen Stegen begrenzte Schlitzöffnungen aufweist, die in ihrer Form und Größe an die zu sortierenden Fische anpassbar und für diese verschließbar sind.

Fisch ist ein wertvolles Nahrungsmittel, das zunehmend in Aquakultur erzeugt wird. Da sich die Individuen vieler Fischarten aber unterschiedlich schnell entwickeln und auch gegenseitig beeinflussen, ist es erforderlich, die lebenden Fische zu sortieren, um sie voreinander zu schützen oder auch entnehmen zu können. Lebende Fische werden in der Regel mit feststehenden oder mobilen Netzen sortiert, was für die Fische eine große Stressbelastung bedeutet. Zunehmend werden daher Sortiervorrichtungen konzipiert, die auch eine freiwillige und damit stressarme Selbstsortierung der Fische ermöglichen.

### Stand der Technik

Aus der WO 01/28318 A1 ist eine Sortiervorrichtung für lebende Fische mit mehreren Gittereinrichtungen bekannt, die horizontal übereinander in einem nach oben offenen Wassertank angeordnet sind. Die Gittereinrichtungen weisen jeweils ein Gitter mit Durchgangsöffnungen auf, wobei diese in Richtung auf den Tankboden kleiner werden. Jedes Gitter teilt den Wassertank in zwei Bereiche (Sortierbereich, Nicht-Sortierbereich). Am Tankboden befindet sich Fischfutter als Lockmittel. Die Fische durchschwimmen je nach Größe die verschiedenen Gitter mit den unterschiedlich großen Durchgangsöffnungen und sortieren sich dabei im Wassertank freiwillig in der Form, dass sich die größten Fische im oberen Bereich und die kleinsten Fische im unteren Bereich des Wassertanks aufhalten. Von den einzelnen Sortierebenen führen Verbindungsleitungen zu weiteren Wassertanks, in denen sich dann nur Fische vornehmlich einer Größe aufhalten. Aus der US 2 690 158 A ist eine Sortiervorrichtung für lebende Fische bekannt, bei der die Gittereinrichtung vertikal in ein Gewässer eingestellt wird. Die Gittereinrichtung umfasst ein Gitter, das in Reihen und Spalten angeordnete langlochähnliche Durchgangsöffnungen aufweist. Diese sind vertikal ausgerichtet, sodass Fische mit unterschiedlicher Höhe voneinander getrennt werden. Weiterhin laufen die Durchgangsöffnungen konisch zu, sodass ein Zurückschwimmen der Fische verhindert wird. Aus der DE 10 2015 011 965 A1 ist eine Sortiervorrichtung für lebende Fische zur freiwilligen Selbstsortierung bekannt, bei der die Fische durch pendelnde Rückschlagklappen, die in Vielzahl parallel nebeneinanderangeordnet sind, animiert werden, diese zu durchschwimmen. Parallel dazu angeordnete Durchgangsöffnungen vorgegebenen Durchmessers ermöglichen nur Fischen bis zu einer bestimmten Größe ein Zurückschwimmen.

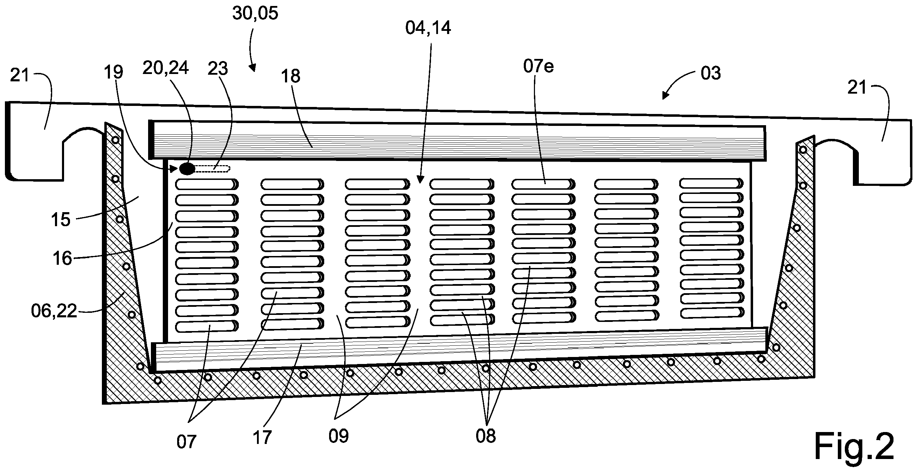

Die der Erfindung nächstliegende Sortiereinrichtung für lebende Fische ist aus der **Veröffentlichung** "Influence of feeding sequence, light and colour on the performance of a self-grading-system designed for turbot (*Scophthalmus maximus*)" von M. Bögner et al. (in Aquacultural Engineering 77 (2017) 1-8) bekannt. Die gattungsgemäße Sortiervorrichtung umfasst einen nach oben offenen Wassertank, in dessen Inneren eine Gittereinrichtung vertikal angeordnet ist (vergleiche Fig. 2 ebenda). Die Gittereinrichtung ist in ihrer Größe an den Querschnitt des Wassertanks angepasst und im Wasserbereich von einem umlaufenden Dichtelement umgeben. Sie teilt den Wassertank in zwei voneinander getrennte Bereiche bezüglich der vorhandenen Fische ("Sortierbereich" und "Nicht-Sortierbereich"). Durch das Dichtelement wird ein Vorbeischwimmen der Fische an der Gittereinrichtung verhindert, außerdem sind keine konstruktiven, eingreifenden Maßnahmen zur Befestigung der Gittereinrichtung an den Tankwandungen erforderlich (vergleiche Kap. 2.1, 2.2 ebenda). Die Gittereinrichtung weist eine Vielzahl von Schlitzöffnungen auf, die parallel in mehreren Spalten und Reihen angeordnet sind, sodass zwischen den Schlitzöffnungen horizontale und vertikale Stege gebildet sind. Dabei sind die Schlitzöffnungen als horizontale Langlöcher ausgeprägt, damit sie von horizontal ausgeprägten Plattfischen durchschwommen werden können. Die Schlitzöffnungen sind in ihrer Breite an die Breite der Plattfische anpassbar und weisen eine Breite zwischen 7 und 18 cm auf, wohingegen die Höhe konstant auf 3,5 cm bemessen ist. An beiden Enden sind die Schlitzöffnungen abgerundet. Beim Einbringen eines Gitters mit ausgewählter konstanter Breite der Schlitzöffnungen in den Wassertank sind die Schlitzöffnungen verschlossen, sodass die im Wasser befindlichen Fische nicht hindurchschwimmen können. Nach einer Standzeit zur Beruhigung der Fische werden die Schlitzöffnungen geöffnet und die Fische können entsprechend ihrer Größe hindurchschwimmen oder werden zurückgehalten. In der **Veröffentlichung** wird eine Gittereinrichtung mit einer einzigen ausgewählten Breite der Schlitzöffnungen dargestellt. Andere Breiten werden durch Austausch der gesamten Gittereinrichtung ausgewählt, wobei erheblicher Stress für die Fische entsteht. Die Schlitzöffnungen werden durch eine Abdeckung verschlossen, deren Entfernung ebenfalls Stress auslöst.

Weiterhin ist es aus der EP 1 212 940 A1 bekannt, gefangene Fische über eine Einrichtung nach ihrer Größe zu sortieren, die aus zwei Reihen von Zylindern besteht. Um die Größe der durchzulassenden Fische einzustellen, sind die beiden Reihen in ihrem Abstand zueinander einstellbar. Dabei liegt die Einstellachse aber orthogonal zu den Zylinderreihen. aus der US 2015/0250149 A1 ist ein Gitter für einen Wassertank bekannt, der mittels Saugnäpfen an den Tankwandungen befestigt wird. Dabei handelt es sich aber um ein Trenngitter mit einer sehr kleinen Maschengröße. Aus der US 3 204 605 A ist es weiterhin bekannt, ein seitliches Schienensystem am Wassertank vorzusehen, mit dem Berieselungsrohre über dem Wassertank positioniert und verschoben werden können. Schließlich ist es noch auf dem gattungsfremdem Gebiet der Belüftungen aus der EP 0 179 304 A1 bekannt, eine Kühlerjalousie vorzusehen, bei der zum Einstellen der Größe der Luftauslassschlitze zwei Schlitzöffnungsplatten gleicher Ausprägung vorhanden sind, die in ihren Ebenen parallel zueinander verschoben werden können. Für einen Unterwassereinsatz sind aber derartige Vorrichtungen nicht geeignet.

Aus der US 2011/0 107 977 A1 ist eine Aquarientrennwand bekannt, die kleine Öffnungen für die Wasserzirkulation und große Öffnungen für den Durchtritt von Futterfischen aufweist, wobei die großen Öffnungen durch einen Schiebetürmechanismus mit einer verschiebbaren Platte verschließbar sind. Aus der US 6 474 265 B1 ist eine anpassbare Aquarientrennwand bekannt, die aus zwei steifen, in ihrer Größe unveränderliche Öffnungen aufweisenden Platten besteht, die zur Größenanpassung an die Beckenbreite gegeneinander verschiebbar ausgebildet sind. Aus der WO 03/092 369 A1 ist eine Fischsortiervorrichtung bekannt, die verschiebbare Schotten mit Sortiergittern aufweist, wobei die Größen der Öffnungen der Sortiergitter veränderbar sind. Ein Mechanismus zur Größenverstellung wird nicht beschrieben. Ferner ist aus der JP 2012/152 146 A eine Aquarientrennwand bekannt, die aus zwei vertikal gegeneinander verschiebbaren Platten mit Öffnungen besteht, wobei sich die Öffnungen in der Offenstellung einander entsprechen und in der Schließstellung einander überdecken. Eine Verschiebbarkeit in Längsrichtung der Öffnungen ist nicht vorgesehen. Schließlich ist noch aus der CN104137796 A eine Sortiervorrichtung bekannt, bestehend aus einer Vielzahl von Gittereinheiten, die durch Verbindungsstücke miteinander verbunden sind. Die Dicke und die Abstände der Gitterstäbe der Gittereinheiten können je nach Anforderungen eingestellt werden, um verschiedene Fischarten in kurzer Zeit auszusortieren und zu trennen, ohne die Fische zu verletzen.

### Aufgabenstellung

Ausgehend von dem zuvor erläuterten Stand der Technik ist die Aufgabe für die vorliegende Erfindung darin zu sehen, die eingangs beschriebene gattungsgemäße Sortiervorrichtung so weiterzubilden, dass eine variable Einstellung der Schlitzöffnungen möglichst mit einem geringen Arbeitsaufwand und ohne Stressbelastung für die Fische vorgenommen werden kann. Die Lösung für diese Aufgabe ist dem Hauptanspruch zu entnehmen. Vorteilhafte Weiterbildungen der Erfindung werden in den Unteransprüchen aufgezeigt und im Folgenden im Zusammenhang mit der Erfindung näher erläutert.

Erfindungsgemäß ist bei der beanspruchten Sortiervorrichtung vorgesehen, dass die Gittereinrichtung zumindest eine Trägerplatte und zumindest eine Einstellplatte mit einer identischen Ausbildung und Anordnung der Schlitzöffnungen und horizontalen und vertikalen Stege umfasst, wobei die Trägerplatte den Wassertank in die zwei Bereiche unterteilt und die Einstellplatte verschiebbar auf der Trägerplatte angeordnet ist und je nach Position der Einstellplatte die Schlitzöffnungen der Trägerplatte von den horizontalen und vertikalen Stegen der Einstellplatte überdeckt und effektive Schlitzöffnungen zwischen einem Maximalwert und einem Minimalwert gebildet sind, wobei die effektiven Schlitzöffnungen auf der Trägerplatte beim Maximalwert vollständig geöffnet und beim Minimalwert soweit geschlossen sind, dass das Durchschwimmen der zu sortierenden Fische verhindert ist.

Bei der vorgeschlagenen Erfindung werden durch planparalleles Verschieben der Einstellplatte auf der Trägerplatte die Schlitzöffnungen in der Trägerplatte so von den Schlitzöffnungen in der Einstellplatte überdeckt, dass sich effektive Schlitzöffnungen ergeben. Der Begriff "effektiv" bezieht sich dabei auf die tatsächliche Durchschwimmbreite durch die überlagerten Schlitzöffnungen. Dabei erfolgt die Einstellung der effektiven Schlitzöffnungen völlig ohne Stress für die Fische. Die Trägerplatte wird in den Wassertank eingebracht, das Verschieben der Einstellplatte erzeugt dann keine große Bewegung im Wasser. Bei der Einstellung der Größe der effektiven Schlitzöffnungen kann durch eine horizontale Verschiebung der Einstellplatte deren Breite und durch eine vertikale Verschiebung der Einstellplatte deren Höhe verändert werden, wobei die unverdeckten Schlitzöffnungen auf der Trägerplatte den Maximalwert für die Breite und die Höhe der effektiven Schlitzöffnungen darstellen. Diese können durch das Verschieben der Einstellplatte nur verkleinert werden. Dabei ist der einstellbare Minimalwert so bemessen, dass keine zu sortierenden Fische mehr durch die Schlitzöffnungen hindurchschwimmen können. Die bei dieser Einstellung erreichten effektiven Schlitzöffnungen sind somit alle als verschlossen anzusehen. Die Wasserzirkulation und das Hindurchschwimmen von nicht zu sortierenden Fischen mit einer Größe unterhalb des Minimalwerts werden dadurch nicht behindert. Weiterhin können durch die vertikalen Stege der Einstellplatte die Schlitzöffnungen in der Trägerplatte so überdeckt werden, dass sich nebengeordnete effektive Schlitzöffnungen mit einer kleineren Breite als die eingestellte Breite ergeben, wobei nur die größeren effektiven Schlitzöffnungen der Sortierung dienen. Die nebengeordneten effektiven Schlitzöffnungen wirken wiederum für die Fische, die größer sind, wie verschlossen.

Durch das erfindungsgemäße Vorsehen von zwei aufeinander verschiebbaren Platten mit jeweiliger Schlitzanordnung wird in besonders einfacher Weise eine Verstellbarkeit der Schlitzbreiten unter Belassen einer einzigen Gittereinrichtung im Wassertank erreicht. Das arbeitstechnische sehr aufwändige Austauschen von Gittereinrichtungen mit unterschiedlichen Schlitzbreiten entfällt völlig. Dadurch wird nicht nur der Arbeitsaufwand erheblich verringert, gleiches gilt auch für die Stressbelastung für die Fische. Diese nehmen das Verschieben der Einstellplatte auf der Trägerplatte zur Veränderung der Schlitzbreite kaum bis gar nicht wahr.

Die Trägerplatte und die Einstellplatte zeigen zwar eine identische Ausbildung ihrer Schlitzöffnungen und Stege, diese können aber in der Größe und Anordnung beliebig, insbesondere auch unregelmäßig, sein. Dies kann je nach zu sortierenden Fischsorte ein Vorteil sein. Für die Herstellung und einfache Anwendung der Platten ist es jedoch vorteilhaft, wenn die Schlitzöffnungen gleiche Größen aufweisen und regelmäßig angeordnet sind. Dabei ist es gemäß einer ersten Modifikation der Erfindung vorteilhaft und bevorzugt, wenn die Schlitzöffnungen in der Trägerplatte und in der Einstellplatte eine langlochartige Ausbildung parallel zum Boden das Wassertanks aufweisen und in mehreren Reihen und Spalten angeordnet sind, wobei alle Schlitzöffnungen eine gleiche Höhe und Breite aufweisen.

Eine derartige Ausbildung der Schlitzöffnungen ist besonders geeignet für Sortiervorgänge bei Plattfischen, die mit ihrer Plattseite parallel zum Boden schwimmen. Dabei unterscheiden sich die Plattfische in ihren Wachstumsstadien vor allem in ihrer Breite bzw. in ihrem Durchmesser und nicht in ihrer Höhe. Es ist daher ausreichend, die Breite der effektiven Schlitzöffnungen variabel zu gestalten und die Höhe konstant zu lassen. Außerdem muss die Einstellplatte nur horizontal verschiebbar auf der Trägerplatte angeordnet sein. Eine vertikale Verschiebbarkeit entfällt. Verletzungen können ebenfalls vermieden werden, wenn gemäß einer nächsten vorteilhaften Modifikation die Schlitzöffnungen an ihren beiden Enden halbrund ausgebildet sind. Außerdem ergibt sich eine genau definierte, konstante Breite der Schlitzöffnungen, die garantiert, dass nur Fische bis zu einer vorgegebenen maximalen Breite hindurchschwimmen können. Bei eckigen oder elliptisch abgerundeten Schlitzöffnungen ergeben sich in den Diagonalen unterschiedliche Breiten, die das Sortierergebnis verfälschen können. Desweiteren ist es vorteilhaft, den Fischen so viele Schlitzöffnungen wie möglich anzubieten, um möglichst keinen zusätzlichen Stress zu erzeugen. Deshalb ist es gemäß einer weiteren Fortbildung der erfindungsgemäßen Sortiervorrichtung bevorzugt und vorteilhaft, wenn die horizontalen Stege so schmal wie konstruktiv möglich und die vertikalen Stege breiter als horizontalen Stege ausgebildet sind. Es ergeben sich viele Schlitzöffnungen in einzelnen Spalten und eine große effektive Durchschwimmfläche. Hingegen sind die vertikalen Stege breiter ausgebildet, beispielsweise fünf bis sechsmal so breit wie die horizontalen Stege, und dienen bei einer ausschließlich horizontalen Verschiebung der Einstellplatte auf der Trägerplatte zur Veränderung der Breite der effektiven Schlitzöffnungen.

Die Schlitzöffnungen bei der Erfindung können beliebige geometrische Formen aufweisen. Sie können insbesondere rund oder quadratische, aber auch rechteckig oder oval, jeweils in regelmäßiger oder auch unregelmäßiger Form, ausgebildet sein. Durch die Überlagerung der Einstellplatte mit der Trägerplatte mit jeweils identischer Ausbildung und Verteilung der Schlitzöffnungen können nahezu beliebige Formen von effektiven Schlitzöffnungen, die sich sinnvoll zur Sortierung lebender Fische eignen, erzeugt werden. In der Bemaßung sind die Schlitzöffnungen den Abmaßen der zu sortierenden Fische anpassbar. Bevorzugt und vorteilhaft ist bei einer speziellen Ausführungsform der Erfindung vorgesehen, dass die Schlitzöffnungen eine Breite von 180 mm und die vertikalen Stege eine Breite von 60 mm aufweisen, sodass die effektiven Schlitzöffnungen stufenlos zwischen 180 mm und 60 mm einstellbar sind. Dabei kann die Höhe der Schlitzöffnungen bevorzugt 35 mm betragen. Mit derartigen Abmessungen können besonders gut Plattfische in allen Wachstumsstadien sortiert werden.

Die Einstellung der Größe der effektiven Schlitzöffnungen erfolgt bei der mit der Erfindung beanspruchten Sortiervorrichtung durch ein horizontales und/oder vertikales Verschieben der Einstellplatte auf der Trägerplatte, wobei ein rein horizontales Verschieben bevorzugt wird. Dabei sind unterschiedlichste konstruktive Ausführungsformen denkbar. Beispielsweise können verschiedene Fixierungslöcher vorgesehen werden, die in unterschiedlichen Zuordnungen zur Überdeckung gebracht und dann beispielsweise mit Steckstiften blockiert werden. Auch sind Schienensysteme möglich, in denen die Einstellplatte auf der Trägerplatte geführt wird. Besonders vorteilhaft und bevorzugt ist es aber gemäß einer nächsten Modifikation der Erfindung, wenn die Einstellplatte zwischen einer Aufnahmeschiene und einer Abdeckschiene auf der Trägerplatte seitlich stufenlos verschiebbar geführt und mittels zumindest einer Feststelleinrichtung fixierbar ist. Mit dieser konstruktiven Lösung kann die Einstellplatte besonders einfach und stressfrei für die Fische stufenlos verstellt werden. Die Einstellplatte ist in der Aufnahmeschiene an der Trägerplatte sicher vertikal gelagert. Die Abdeckschiene verhindert ein Abklappen der Einstellplatte von der Trägerplatte weg. Beide Schienen überdecken die Anlagespalte zwischen Einstellplatte und Trägerplatte und verhindern eine ggfs. blockierende Verschmutzung des Zwischenraums und Hineinschwimmen von Fischen. Die effektiven Schlitzöffnungen können durch einfaches seitliches Verschieben der Einstellplatte in der Aufnahmeschiene in ihrer Breite eingestellt werden, wobei die Höhe der effektiven Schlitzöffnungen konstant bleibt und der Höhe der Schlitzöffnungen entspricht. Ist die gewählte Breite der effektiven Schlitzöffnungen eingestellt, so wird sie in einfacher Weise durch Betätigen der Feststelleinrichtung fixiert. Diese kann beispielsweise aus einer Gewindestange bestehen, die in einem Langloch in der Trägerplatte läuft und mittels zweier Handgriffe gegen die Trägerplatte verspannt wird. Eine Variation auch der Höhe der Schlitzöffnungen durch vertikales Verschieben der Einstellplatte auf der Trägerplatte ist beispielsweise mittels einer entsprechenden Kulissenführung möglich, in der mehrere verspannbare Gewindestangen geführt sind. Dabei überdecken die Aufnahme- und die Abdeckschiene einen größeren Bereich der Einstellplatte und lassen ihre eine vertikale Bewegung zu.

Besonders wichtig bei einer Sortiereinrichtung für lebende Fische nach der Erfindung ist die weitgehende Stressfreiheit für die Fische. Deshalb werden aufwändige Montagearbeiten im Wassertank zum Festlegen der Trägerplatte an einer vorgewählten Stelle vermieden. Dies kann bevorzugt und vorteilhaft bei der Erfindung dadurch erfolgen, dass der Wassertank rechteckig ausgebildet ist und an zwei parallelen Seiten Laufschienen aufweist, auf denen die Trägerplatte in Laufschlitten gelagert und entlang des Wassertanks wählbar positionierbar ist, wobei die Trägerplatte den Wassertanks über eine flexible Dichtschürze als umlaufendes Dichtelement in die zwei Bereiche unterteilt. Durch diese konstruktive Ausführungsform ergibt sich außerhalb des Wassertanks eine stabile Führung und Lagerung der Trägerplatte. Zudem fixiert die flexible, aber doch stabil ausgebildete Dichtschürze die Trägerplatte und damit die gesamte Gittereinrichtung stabil im Inneren des Wassertanks. Die Arretierung der Trägerplatte am vorgesehen Ort ist ebenfalls einfach möglich, beispielsweise durch einen Bolzenarretierung in gelochten Laufschienen. Damit die Fische nicht an der Trägerplatte vorbeischwimmen, ist das Dichtelement als flexible Dichtschürze ausgebildet, die sich an die Innenseite des Wassertanks anschmiegt. Die Stabilität der Lagerung der Trägerplatte kann noch weiter verbessert werden, wenn gemäß einer nächsten Erfindungsmodifikation bevorzugt und vorteilhaft vorgesehen ist, dass die Trägerplatte an ihrer oberen Seite an den beiden Enden zwei Hakenansätze aufweist, die in zwei Spaltplatten auf den beiden Laufschlitten eingreifen. Insbesondere können die Hakenansätze und die Trägerplatte einstückig, beispielsweise aus einer Faserverbundstoffplatte, ausgebildet sein.

Eine besonders geringe Stressbelastung für die Fische ergibt sich bei der Sortierung, wenn diese freiwillig erfolgt. Bei der Erfindung wird dafür die Gittereinrichtung mit einer vorgegebenen Größe der Schlitzöffnungen in den Wassertank stationär eingebracht. Nach einer Gewöhnungszeit bei "für die Fische verschlossenen" Schlitzöffnungen (siehe oben) durchschwimmen die Fische die freigegebenen effektiven Schlitzöffnungen dann freiwillig und in spielerischer, neugieriger Art und Weise. Weiter unten werden noch zusätzliche Stimuli aufgezeigt, die die Selbstsortierung effektiv unterstützen können. Wenn die Selbstsortierung abgeschlossen ist, können die Schlitzöffnungen wieder verschlossen werden, sodass die Fische in den beiden unterschiedlichen Kompartiments weiter wachsen können. Nach einer entsprechenden Zeit können dann die effektiven Schlitzöffnungen wieder geöffnet oder in ihrer Breite verändert werden, sodass sich die Fische erneut selbstsortieren. Mit dieser beliebig oft wiederholbaren Kohortenabtrennung kann sichergestellt werden, dass immer Fische mit einer gewünschten Größe sortiert bzw. entnommen werden können.

Mit etwas mehr, aber noch keinesfalls schädlichem Stress kann bei der Erfindung auch eine aktive Sortierung durchgeführt werden. Dafür wird die Gittereinrichtung nicht stationär im Wassertank belassen, sondern aktiv durch das Wasser in diesem hindurchgezogen. Dabei werden die Fische in dem Bereich, auf den die Gittereinrichtung hinbewegt wird, zusammengedrängt, sodass die Fische mit bis zu den eingestellten effektiven Schlitzöffnungen passender Größe schließlich durch diese "entfliehen". Für diesen aktiven Sortiervorgang ist es vorteilhaft und bevorzugt, wenn die Trägerplatte kontinuierlich auf den Laufschienen verschiebbar angeordnet ist. Sie kann dann beispielsweise manuell (eine Automatisierung ist ohne weiteres möglich) durch den Wassertank gezogen werden, bis nur noch diejenigen Fische vor der Gittereinrichtung verbleiben, die nicht durch die eingestellten effektiven Schlitzöffnungen passen. Hierbei handelt es sich also um die größten Fische im Wassertank. Diese können dann einfach dem Wassertank entnommen werden. Danach kann die effektive Schlitzöffnung verkleinert und die Gittereinrichtung manuell (oder auch automatisiert) an das andere Ende des Wassertanks geschoben werden. Wieder werden die Fische vereinzelt, die nicht mehr durch die effektiven Schlitzöffnungen passen. Auf diese Weise kann durch mehrmaliges Hin- und Herziehen der Trägerplatte mit jeweils anderen Breiten der effektiven Schlitzöffnungen der gesamte Fischbesatz im Wassertank nach vorgegebenen Größen sortiert werden.

Ein ähnlicher Effekt der unterschiedlichen Größensortierung kann auch bei der freiwilligen, stressminimierten Sortierung der Fische erreicht werden, wenn gemäß einer nächsten Erfindungsmodifikation vorteilhaft und bevorzugt vorgesehen ist, dass die Gittereinrichtung mehrere Trägerplatten mit jeweils darauf angeordneten Einstellplatten aufweist, die beabstandet zueinander im Wassertank angeordnet sind, wobei die effektiven Schlitzöffnungen von Trägerplatte zu Trägerplatte kleiner (oder in der anderen Richtung gesehen größer) ausgebildet sind. Die Trägerplatten sind dann wieder stationär angeordnet, die Fische schwimmen ihrer Größe entsprechend freiwillig durch eine oder mehrere Trägerplatten hindurch. Durch das Trennen der Fische an der Gittereinrichtung entstehen immer ein "Sortierbereich" und ein "Nicht-Sortierbereich". Bei der freiwilligen Selbstsortierung kann der Bereich hinter der Gittereinrichtung als Sortierbereich aufgefasst werden (alle Fische mit Größen gleich oder kleiner der Größe der effektiven Schlitzöffnungen befinden sich hier - oder sollten es am Ende des Sortiervorgangs tun). Alle Fische, die nicht durch die effektiven Schlitzöffnungen passen, bleiben im Nicht-Sortierbereich (alle Größen größer als die Größe der effektiven Schlitzöffnungen befinden sich hier). Auch bei der aktiven Sortierung kann der Bereich vor der Gittereinrichtung als Nicht-Sortierbereich aufgefasst werden, weil sich alle anderen Fische durch die effektiven Schlitzöffnungen sortieren. Ebenso kann aber auch der Bereich vor der Gittereinrichtung als Sortierbereich bezeichnet werden, weil sich am Ende des Sortiervorgangs hier nur noch die Fische ab einer Größe oberhalb der effektiven Schlitzöffnungen befinden. Alle kleineren sind durch die effektiven Schlitzöffnungen weggeschwommen. Die Bezeichnung ist somit Festlegungssache. Bei der Erfindung soll derjenige (andere) Bereich als "Sortierbereich" bezeichnet werden, in den die Fische durch die Gittereinrichtung hineinschwimmen. Der "Nicht-Sortierbereich" ist entsprechend derjenige (eine) Bereich, in dem die Fische vor der Gittereinrichtung verbleiben. Bei Vorsehen mehrerer Träger und Einstellplatten mit unterschiedlich großen effektiven Schlitzöffnungen im Wassertank entstehen mehrere voneinander getrennte Kompartiments. Dabei ist jeweils der Sortierbereich bezogen auf die eine Trägerplatte auch gleichzeitig der Nicht-Sortierbereich für die nachfolgende Trägerplatte. Grundsätzlich sollen die Fische freiwillig von dem Nicht-Sortierbereich in den Sortierbereich schwimmen. Dazu ist es vorteilhaft, den Fischen zusätzliche Anreize zu geben, insbesondere auch deshalb, um ein Zurückschwimmen der Fische aus dem Sortierbereich in den Nicht-Sortierbereich weitgehend zu verhindern. Deshalb kann bei der Erfindung vorteilhaft und bevorzugt vorgesehen sein, dass im Sortierbereich zusätzlich verschiedene Stimuli zur Anlockung der Fische vorgesehen sind. Hierbei kann bevorzugt und vorteilhaft vorgesehen sein, dass die Stimuli von einer Futterquelle, einer Lichtquelle und/oder einer hellen Einfärbung gebildet sind. Die Fische werden angezogen von Futter, hellem Licht und im Wasser vorkommenden, hellen Farben. Abgestoßen werden sie hingegen von Dunkelheit und dunklen Farben. Diese Erkenntnisse sind ausführlich dargestellt in der weiter oben genannten Veröffentlichung vom M. Bögner et al.

In Anlehnung an die gewonnen Erkenntnisse ist es zudem bei der Erfindung vorteilhaft und bevorzugt, wenn die Trägerplatten und die Einstellplatten zu dem einen Bereich (Nicht-Sortierbereich) eine helle Einfärbung und/oder zu dem anderen Bereich (Sortierbereich) eine dunkle Einfärbung aufweisen. Die Fische werden also aus dem Nicht-Sortierbereich durch die helle Einfärbung, die vorteilhaft wie im Wasser vorkommend, also weiß, hellblau, hellgelb oder hellgrün, ausgebildet ist, auf der Vorderseite der Trägerplatte (und ggfs. der Einstellplatte, wenn sie sich auf der Vorderseite der Trägerplatte befindet) in den Sortierbereich gelockt und am Zurückschwimmen in den Nicht-Sortierbereich durch die dunkle Einfärbung, vorteilhaft wie im Wasservorkommend, also schwarz, dunkelblau oder dunkelgrün, auf der Rückseite der Trägerplatte (und ggfs. der Einstellplatte, wenn sie sich auf der Rückseite der Trägerplatte befindet) gehindert.

Schließlich können bei der mit der vorliegenden Erfindung beanspruchten Sortiervorrichtung für lebende Fische noch weitere Modifikationen vorgesehen sein, die auch bei anderen Sortiervorrichtungen vorgesehen sind. Insbesondere kann bevorzugt und vorteilhaft vorgesehen sein, dass oberhalb des Wassertanks eine Wasserzulaufeinrichtung und/oder eine Kameraeinrichtung angeordnet ist. Über die Wasserzulaufeinrichtung kann ständig frisches Wasser in den Wassertank eingebracht werden, die Kameraeinrichtung dient der Überwachung der Fische im Wassertank, um eine allgemeine Bestandsüberwachung oder eine Erfassung der vorhandenen Biomasse vornehmen zu können, aber auch um gegebenenfalls auftretende Stressvermehrung bei der freiwilligen oder aktiven Sortierung rechtzeitig erkennen zu können. Zusammen mit diesen Modifikationen eignet sich die beanspruchte Sortiervorrichtung daher besonders gut für die Aquakulturzucht von Plattfischen, insbesondere für die freiwillige Selbstsortierung. Einige Arten von Plattfischen eigenen sich besonders gut für die Aquakulturzucht und erbringen hohe Erträge von bester Qualität. Auch für diese bevorzugte Anwendung können weitere Ausführungen der **Veröffentlichung** von M. Bögner et al. entnommen werden. Weitere Erläuterungen zu der vorliegenden Erfindung und ihre angesprochenen Modifikationen können hingegen dem nachfolgenden Ausführungsbeispielen entnommen werden.

### Ausführungsbeispiele

Nachfolgend werden die mit der vorliegenden Erfindung beanspruchte Sortiervorrichtung für lebende Fische und ihre bevorzugten Modifikationen anhand der schematischen Figuren zum besseren Verständnis der Erfindung noch weitergehend erläutert. Dabei zeigt die
- **Fig.** 1: eine schematische Ansicht der gattungsbildenden Sortiervorrichtung aus dem Stand der Technik,
- **Fig.** 2: die Gittereinrichtung nach der Erfindung im Detail,
- **Fig.** 3: die Schlitzöffnungen in der Gittereinrichtung im Detail und
- **Fig.** 4: die Sortiervorrichtung mit einer geführten Gittereinrichtung mit mehreren Kompartiments.

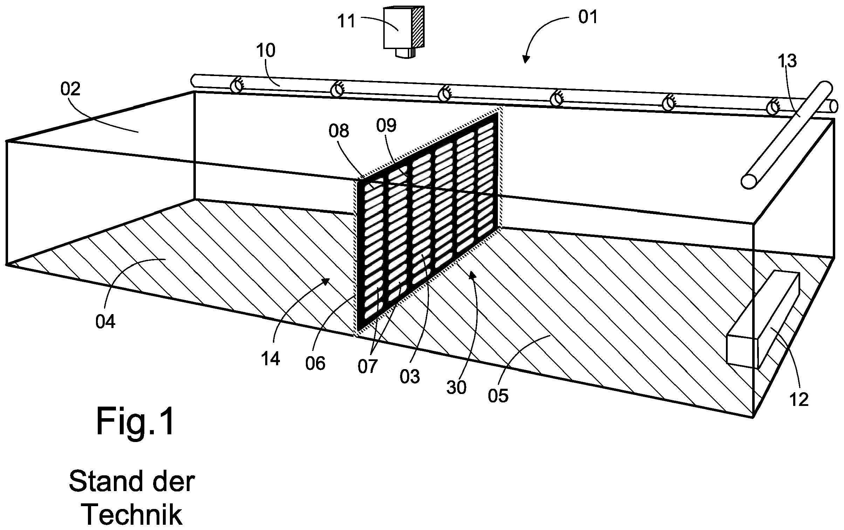

In der **Fig.** 1 ist die aus der oben genannten **Veröffentlichung** von M. Bögner et al. bekannte gattungsbildende Sortiervorrichtung **01** für lebende Fische dargestellt (Stand der Technik). Als Hauptkomponenten zeigen sich ein nach oben offener Wassertank **02** und eine vertikale Gittereinrichtung **03,** die den Wassertank **02** in einen Bereich **04** ("vor" der Gittereinrichtung **03,** "Nicht-Sortierbereich") und einen anderen Bereich **05** ("hinter" der Gittereinrichtung **03,** "Sortierbereich") unterteilt. Ein an der Gittereinrichtung **03** umlaufendes Dichtelement **06** schließt innen an die Wandungen und den Boden des Wassertanks **02** an und verhindert ein seitliches Vorbeischwimmen der Fische an der stationären Gittereinrichtung **03.** Die Gittereinrichtung **03** zeigt eine Vielzahl von langlochartigen, seitlich gerundeten Schlitzöffnungen **07,** die von horizontalen Stegen **08** und vertikalen Stegen **09** begrenzt sind, wobei die horizontalen Stege **08** dünner sind als die vertikalen Stege **09.** Dabei sind die Schlitzöffnungen **07** in ihrer Form und Größe an die zu sortierenden Fische anpassbar und auch verschließbar, sodass keine Fische hindurchschwimmen können. Das Verschließen der Gittereinrichtung **03** ist sinnvoll beim Eingewöhnen und nach Beendigung der Sortierphase.

Desweiteren umfasst die Sortiervorrichtung **01** eine Wasserzulaufeinrichtung **10,** die für möglichst gleichmäßige Wasserbedingungen in beiden Bereichen **04, 05** sorgt (damit ausschließlich die eingesetzten zusätzlichen Stimuli für das Anlocken der Fische verantwortlich sind), und eine Kameraeinrichtung **11,** die der permanenten Erfassung des Sortiererfolges dient (beides ist bei kommerziellen Anlagen nicht zwingend erforderlich oder auch anders umsetzbar), oberhalb des Wassertanks **02.** In dem anderen Bereich **05** (Sortierbereich) sind verschiedene Stimuli zum Anlocken der Fische durch die Schlitzöffnungen **07** in der Gittereinrichtung **03** angeordnet. Im gezeigten Beispiel handelt es sich um eine Futterquelle **12** und eine Lichtquelle **13.** Als weiteren Stimulus weist die Gittereinrichtung **03** in dem einen Bereich **04** (Nicht-Sortierbereich) eine helle Einfärbung **14** (beispielsweise Farbe Weiß) zur Anlockung und in dem anderen Bereich **05** (Sortierbereich) eine dunkle Einfärbung **30** (beispielsweise Farbe Schwarz) zur Abschreckung der Fische auf. Derartige anlockende und abschreckende Einfärbungen können auch auf den Innenseiten des Wassertanks **02** vorgenommen werden. In der Regel sind diese aber überall in einem gleichen Farbton, beispielsweise in einem hellen Blau- oder Grünton, gefärbt.

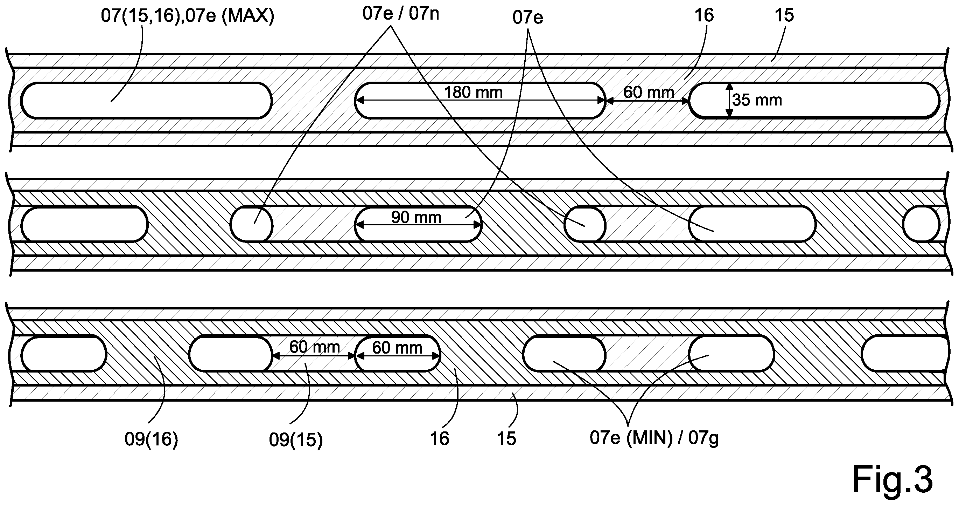

Die **Fig.** 2 zeigt im Detail die Gittereinrichtung **03.** Zu erkennen sind eine Trägerplatte **15** und eine Einstellplatte **16,** die mit der Trägerplatte **15** verschiebbar verbunden ist. Beide weisen bezügliche Größe und Anordnung identische Schlitzöffnungen **07** und damit auch identische vertikale und horizontale Stege **08, 09** auf. In der gezeigten Darstellung liegen die Schlitzöffnungen **07** von Trägerplatte **15** und Einstellplatte **16** genau aufeinander, sodass sich ein Maximalwert für die effektiven Schlitzöffnungen **07e** ergibt, vergleiche **Fig.** 3. Die Schlitzöffnungen **07** sind langlochartig ausgebildet und parallel zum Boden des Wassertanks **02,** vergleiche **Fig.** 1, in mehreren Reihen und Spalten angeordnet. Die horizontalen Stege **08** zwischen den Schlitzöffnungen **07** in jeweils einer Spalte sind so schmal wie konstruktiv möglich ausgebildet, um den Fischen einen großen Durchschwimmquerschnitt zu bieten. Die vertikalen Stege **09** zwischen den Spalten sind hingegen breiter gestaltet, beispielsweise fünf- bis sechsmal so breit wie die horizontalen Stege **08,** weil sie der Verdeckung der Schlitzöffnungen **07** in der Trägerplatte **15** bei einer horizontalen Verschiebung der Einstellplatte **16** dienen. Alle Schlitzöffnungen **07** weisen im gezeigten Ausführungsbeispiel eine gleiche, konstante Höhe auf. Die Trägerplatte **15** weist parallel zu ihrer unteren Kante eine Aufnahmeschiene **17** auf, in der die Einstellplatte **16** gelagert ist. Desweiteren weist die Trägerplatte **15** parallel zu ihrer oberen Kante eine Abdeckschiene **18** auf, die die Einstellplatte **16** übergreift. Beide Schienen **17, 18** halten die Einstellplatte **16** an der Trägerplatte **15** fest und überdecken den Spalt zwischen beiden, sodass sich kein Schmutz absetzen oder Fische hineinschwimmen können. Die seitliche Verschiebbarkeit der Einstellplatte **16** ist dabei aber nicht behindert und nur von der Querschnittsbreite des Wassertanks **02** begrenzt.

Nach der vorgewählten Positionierung der Schlitzöffnungen **07** der Einstellplatte **16** zu den Schlitzöffnungen **07** der Trägerplatte **15** und damit nach Festlegung der aktuellen Breite der effektiven Schlitzöffnungen **07e** wird die Einstellplatte **16** an der Trägerplatte **15** fixiert. Dies erfolgt im gezeigten Ausführungsbeispiel durch Betätigen einer Feststelleinrichtung **19,** bei der eine Gewindestange **20** durch ein Langloch **23** in der Trägerplatte **15** greift und mittels zweier Handgriffe **24** gegen die Trägerplatte **15** verspannt wird. Eine Anordnung mehrerer solcher Feststelleinrichtungen **18** entlang der oberen Kante der Einstellplatte **16** ist ohne weiteres möglich, aber nicht zwingend erforderlich, da bereits eine einzige Feststelleinrichtung **18** sehr gut funktioniert und ausreicht.

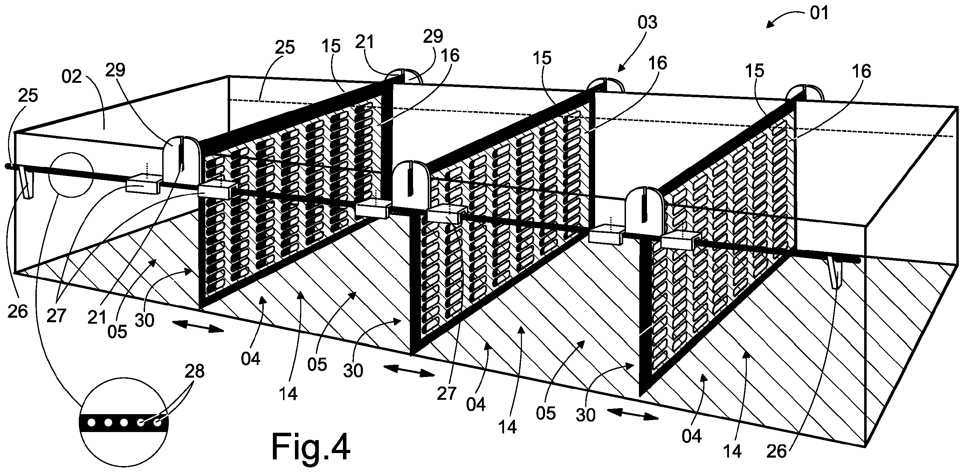

Desweiteren sind an der Trägerplatte **15** an der oberen Kante seitlich Hakenansätze **21** einstückig ausgebildet, die der sicheren Führung der Gittereinrichtung **03** im Wassertank **02** dienen, vergleiche **Fig.** 4. Schließlich ist in der **Fig.** 2 noch das umlaufende Dichtelement **06** in der Form einer umlaufenden flexiblen Dichtschürze **22** dargestellt, die an die Trägerplatte **15** angeschraubt (mit rostfreien Kunststoffschrauben - wie auch alle anderen Elemente der beanspruchten Sortiereinrichtung **01** rostfrei ausgebildet sind) ist und sich an die Wandungen und den Boden des Wassertanks **02** anschmiegt, vergleiche **Fig.** 1.

Die dargestellte Gittereinrichtung **03** zeigt eine helle Einfärbung **14,** wird also mit der Einstellplatte **16** zu dem einen Bereich **04** (Nicht-Sortierbereich) hin ausgerichtet. Auf der anderen Seite ist eine dunkle Einfärbung **30** zu dem anderen Bereich **05** (Sortierbereich) vorgesehen. Eine umgekehrte Anordnung ist auch ohne weiteres möglich, wobei die gezeigte Anordnung den Vorteil hat, dass die "ungestörte" Oberfläche der Gittereinrichtung **03** zu dem anderen Bereich **05** (Sortierbereich zeigt.

In der **Fig.** 3 ist eine schematische Darstellung der einstellbaren Breiten der effektiven Schlitzöffnungen **07e** im Detailausschnitt von einer Reihe von Schlitzöffnungen **07** der Trägerplatte **15** und der Einstellplatte **16** in unterschiedlichen Einstellungen aufgezeigt. Im gezeigten Ausführungsbeispiel haben die vertikalen Stege **09** eine Breite von 60 mm, wohingegen die horizontalen Stege **08** (vergleiche **Fig.** 02) nur eine Höhe von maximal 10 mm aufweisen. Jede Schlitzöffnung **07** hat eine konstante Höhe von 35 mm und eine Breite von 180 mm. Im vollständig geöffneten Zustand der Gittereinrichtung **03** liegen die Schlitzöffnungen **07** von Trägerplatte **15** und Einstellplatte **16** kongruent übereinander und die Breite der Schlitzöffnungen **07** der Trägerplatte **15** entspricht der aktuell eingestellten effektiven Schlitzöffnung **07e** (Maximalwert MAX, in der **Fig.** 3 obere Darstellung). Durch seitliches Verschieben der Einstellplatte **16** kann als kleinste effektive Schlitzöffnung **07e** minimal eine Breite von 60 mm eingestellt werden (Minimalwert MIN. in der **Fig.** 3 untere Darstellung). Bei diesen Abmaßen können die effektiven Schlitzöffnungen **07e** stufenlos zwischen 180 mm und 60 mm eingestellt werden. Die Einstellung MIN bewirkt das Verschließen der Gittereinrichtung **03** für die zu sortierenden Fische, wobei die Wasserzirkulation erhalten bleibt. Außerdem können nicht sortierbare Fische, die kleiner sind als die zu sortierenden, ungehindert den Wassertank **02** durchschwimmen. Die effektiven Schlitzöffnungen **07e** sind somit als für die zu sortierenden Fische geschlossene Schlitzöffnungen **07g** aufzufassen. In der **Fig.** 3, mittlere Darstellung ist eine Einstellung der effektiven Schlitzöffnungen **07e** zwischen den Grenzwerten MAX und MIN dargestellt. In dieser Darstellung sind auch entstandene kleinere effektive Schlitzöffnungen **07e** zu erkennen, die aber nicht zur Sortierung beitragen und als nebengeordnete Schlitzöffnungen **07n** bezeichnet werden können. In der **Fig.** 3 ist weiterhin angedeutet, dass die Schlitzöffnungen **07** an ihren beiden Enden halbrund ausgebildet sind, um eine genau definierte Schlitzbreite für den Sortiervorgang zu erzeugen.

In der **Fig.** 4 ist die Sortiereinrichtung **01** mit einem rechteckigen Wassertank **02** dargestellt. An den parallelen Längsseiten des Wassertanks **02** sind gegenüberliegend zwei Laufschienen **25** angeordnet, die auf Ansätzen **26** an der Außenseite des Wassertanks **02** ruhen. Auf jeder Laufschiene **25** laufen ein oder mehrere Laufschlitten **27.** Die Laufschlitten **27** können entlang der Laufschienen **25** verschoben und gerastert in Bohrungen **28** festgelegt werden (siehe Insert in **Fig.** 4). Jeweils zwei am Wassertank **02** gegenüberliegende Laufschlitten **27** weisen zwei Spaltplatten **29** auf, in die Trägerplatte **15** der Gittereinrichtung **03** mit den Hakenansätzen **21** gelagert ist. Hierdurch ergibt sich eine sehr stabile Lagerung der Gittereinrichtung **03** ohne weitere Befestigungserfordernisse innerhalb des Wassertanks **02.** Mit Hilfe dieser Lagerung kann in einfacher Weise eine aktive Sortierung im Wassertank **02** durchgeführt werden, bei der die Trägerplatten **15** der Gittereinrichtung **03** durch das Wasser gezogen wird (angedeutet durch Doppelpfeil).

Desweiteren ist in der **Fig.** 4 eine Gittereinrichtung **03** mit mehreren Trägerplatten **15** und Einstellplatten **16** dargestellt (im gezeigten Ausführungsbeispiel drei Paar), die parallel im Wassertank **02** angeordnet sind und diesen in mehrere Bereiche (Nicht-Sortierbereiche **04,** Sortierbereich **05**). Die Breite der Schlitzöffnungen **07** ist so eingestellt, dass sie von Trägerplatte **15** zu Trägerplatte **15** kleiner wird (in der **Fig.** 04 von rechts nach links angedeutet). Auf diese Weise kann eine freiwillige Selbstsortierung der Fische, ohne zusätzlichen Stress in verschiedenen Größenbereichen erreicht werden. Um die freiwillige Selbstsortierung der Fische noch zu unterstützen, ist neben den zu **Fig.** 1 vorgesehen Stimuli noch vorgesehen, dass die Trägerplatten **15** und die Einstellplatten **16** eine helle Einfärbung **14** zu dem einen Bereich **04** (Nicht-Sortierbereich) und eine dunkle Einfärbung **30** zu dem anderen Bereich **05** (Sortierbereich) aufweisen (in der **Fig.** 4 nicht erkennbar, da auf den Rückseiten der Trägerplatten **15**).

Die mit der Erfindung beanspruche Sortiereinrichtung **01** für lebende Fische ist mit ihre bevorzugten Modifikationen besonders dazu geeignet, in einer Aquakulturzucht Plattfische einer freiwilligen Selbstsortierung oder einer aktiven Sortierung zu unterziehen, ohne dabei schädlichen Stress zu erzeugen.

### Bezugszeichenliste

- **01**: Sortiervorrichtung
- **02**: Wassertank
- **03**: Gittereinrichtung
- **04**: ein Bereich (Nicht-Sortierbereich)
- **05**: anderer Bereich (Sortierbereich)
- **06**: Dichtelement
- **07**: Schlitzöffnung in 15,16
- **07e**: effektive Schlitzöffnung
- **07g**: "geschlossene" effektive Schlitzöffnung
- **07n**: nebengeordnete effektive Schlitzöffnung
- **08**: horizontaler Steg zwischen 07
- **09**: vertikaler Steg zwischen 07
- **10**: Wasserzulaufeinrichtung
- **11**: Kameraeinrichtung
- **12**: Futterquelle
- **13**: Lichtquelle
- **14**: helle Einfärbung
- **15**: Trägerplatte
- **16**: Einstellplatte
- **17**: Aufnahmeschiene
- **18**: Abdeckschiene
- **19**: Feststelleinrichtung
- **20**: Gewindestange
- **21**: Hakenansatz an 15
- **22**: Dichtschürze
- **23**: Langloch
- **24**: Handgriff
- **25**: Laufschiene
- **26**: Ansatz an 02
- **27**: Laufschlitten
- **28**: Bohrung in 25
- **29**: Spaltplatte
- **30**: dunkle Einfärbung

- **MAX**: Maximalwert für 07e
- **MIN**: Minimalwert für 07e (= 07g)

## Patentansprüche

1. Sortiervorrichtung (01) für lebende Fische mit einem nach oben offenen Wassertank (02) und einer vertikalen Gittereinrichtung (03), die über ein umlaufendes Dichtelement (06) an das Innere des Wassertanks (02) angeschlossen ist und diesen in zwei voneinander getrennte Bereiche (04, 05) unterteilt und mehrere, von horizontalen und vertikalen Stegen (08, 09) begrenzte Schlitzöffnungen (07) aufweist, die in ihrer Form und Größe an die zu sortierenden Fische anpassbar und für diese verschließbar sind,
**dadurch gekennzeichnet, dass** die Gittereinrichtung (03) zumindest eine Trägerplatte (15) und zumindest eine Einstellplatte (16) mit einer identischen Ausbildung und Anordnung der Schlitzöffnungen (07) und horizontalen und vertikalen Stege (08, 09) umfasst, wobei die Trägerplatte (15) den Wassertank (02) in die zwei Bereiche (04,05) unterteilt und die Einstellplatte (16) verschiebbar auf der Trägerplatte (15) angeordnet ist und je nach Position der Einstellplatte (16) die Schlitzöffnungen (07) der Trägerplatte (15) von den horizontalen und vertikalen Stegen (08, 09) der Einstellplatte (16) überdeckt und effektive Schlitzöffnungen (07e) zwischen einem Maximalwert (MAX) und einem Minimalwert (MIN) gebildet sind, wobei die effektiven Schlitzöffnungen (07e) auf der Trägerplatte (15) beim Maximalwert (MAX) vollständig geöffnet und beim Minimalwert (MIN) soweit geschlossen sind, dass das Durchschwimmen der zu sortierenden Fische verhindert ist.

2. Sortiervorrichtung (01) nach Anspruch 1,
**dadurch gekennzeichnet, dass** die Schlitzöffnungen (07) in der Trägerplatte (15) und in der Einstellplatte (16) eine langlochartige Ausbildung parallel zum Boden des Wassertanks (02) aufweisen und in mehreren Reihen und Spalten angeordnet sind, wobei alle Schlitzöffnungen (07) eine gleiche Höhe und Breite aufweisen.

3. Sortiervorrichtung (01) nach Anspruch 2,
**dadurch gekennzeichnet, dass** die Schlitzöffnungen (07) an ihren beiden Enden halbrund ausgebildet sind.

4. Sortiervorrichtung (01) nach Anspruch 2 oder 3,
**dadurch gekennzeichnet, dass** die horizontalen Stege (08) so schmal wie konstruktiv möglich und die vertikalen Stege (09) breiter als die horizontalen Stege (08) ausgebildet sind.

5. Sortiervorrichtung (01) nach einem der vorangehenden Ansprüche 2 bis 4, **dadurch gekennzeichnet, dass**
die Schlitzöffnungen (07) eine Breite von 180 mm und die vertikalen Stege (09) eine Breite von 60 mm aufweisen, sodass die effektiven Schlitzöffnungen (07e) stufenlos zwischen 180 mm (MAX) und 60 mm (MIN) einstellbar sind.

6. Sortiervorrichtung (01) nach einem der vorangehenden Ansprüche 2 bis 5, **dadurch gekennzeichnet, dass** die Einstellplatte (16) zwischen einer Aufnahmeschiene (17) und einer Abdeckschiene (18) auf der Trägerplatte (15) seitlich stufenlos verschiebbar geführt ist und mittels zumindest einer Feststelleinrichtung (19) fixiert ist.

7. Sortiervorrichtung (01) nach einem der vorangehenden Ansprüche 1 bis 6, **dadurch gekennzeichnet, dass** der Wassertank (02) rechteckig ausgebildet ist und an zwei parallelen Seiten Laufschienen (25) aufweist, auf denen die Trägerplatte (15) in Laufschlitten (27) gelagert und entlang des Wassertanks (02) wählbar positionierbar ist, wobei die Trägerplatte (15) den Wassertank über eine flexible Dichtschürze (22) als umlaufendes Dichtelement (06) in die zwei Bereiche (04, 05) unterteilt.

8. Sortiervorrichtung (01) nach Anspruch 7,
**dadurch gekennzeichnet, dass** die Trägerplatte (15) an ihrer oberen Seite an den beiden Enden zwei Hakenansätze (21) aufweist, die in zwei Spaltplatten (29) auf den beiden Laufschlitten (27) eingreifen.

9. Sortiervorrichtung (01) nach Anspruch 7 oder 8,
**dadurch gekennzeichnet, dass** die Trägerplatte (15) kontinuierlich auf den Laufschienen (25) verschiebbar angeordnet ist.

10. Sortiervorrichtung (01) nach einem der vorangehenden Ansprüche,
**dadurch gekennzeichnet, dass** die Gittereinrichtung (03) mehrere Trägerplatten (15) mit jeweils darauf angeordneten Einstellplatten (16) aufweist, die beabstandet zueinander im Wassertank (02) angeordnet sind, wobei die Schlitzöffnungen (07) von Trägerplatte (15) zu Trägerplatte (15) kleiner ausgebildet sind.

11. Sortiervorrichtung (01) nach einem der vorangehenden Ansprüche,
**dadurch gekennzeichnet, dass** bezogen auf die eine oder mehrere Trägerplatten (15) der eine Bereich (04) der Nicht-Sortierbereich und der andere Bereich (05) der Sortierbereich ist, wobei im Sortierbereich zusätzlich verschiedene Stimuli zur Anlockung der Fische vorgesehen sind.

12. Sortiervorrichtung (01) nach Anspruch 11,
**dadurch gekennzeichnet, dass** die Stimuli von einer Futterquelle (12), einer Lichtquelle (13) und/oder einer hellen Einfärbung (14) gebildet sind.

13. Sortiervorrichtung (01) nach einem der vorangehenden Ansprüche,
**dadurch gekennzeichnet, dass** die Trägerplatten (15) und die Einstellplatten (16) zu dem einen Bereich (04) (Nicht-Sortierbereich) eine helle Einfärbung (14) und/oder zu dem anderen Bereich (05) (Sortierbereich) eine dunkle Einfärbung (30) aufweisen.

14. Sortiervorrichtung (01) nach einem der vorangehenden Ansprüche,
**dadurch gekennzeichnet, dass** oberhalb des Wassertanks (02) eine Wasserzulaufeinrichtung (10) und/oder eine Kameraeinrichtung (11) angeordnet ist.

## Claims

1. A sorting device (01) for live fish with an upwardly open water tank (02) and a vertical grid unit (03) that is connected to the interior of the water tank (02) by means of a peripheral sealing element (06) and divides this water tank into two separated regions (04, 05), wherein said grid unit has multiple slit openings (07) that are delimited by horizontal and vertical webs (08, 09), and wherein said slit openings can with respect to their shape and size be adapted to the fish to be sorted and closed for these fish, **characterized in that** the grid unit (03) comprises at least one carrier plate (15) and at least one adjustment plate (16) with an identical design and arrangement of the slit openings (07) and the horizontal and vertical webs (08, 09), wherein the carrier plate (15) divides the water tank (02) into the two regions (04, 05), wherein the adjustment plate (16) is displaceably arranged on the carrier plate (15) and, depending on the position of the adjustment plate (16), the horizontal and vertical webs (08, 09) of the adjustment plate (16) cover the slit openings (07) of the carrier plate (15) such that effective slit openings (07e) between a maximum value (MAX) and a minimum value (MIN) are formed, and wherein the effective slit openings (07e) on the carrier plate (15) are at the maximum value (MAX) completely opened and at the minimum value (MIN) closed to such a degree that the fish to be sorted are prevented from swimming through.

2. The sorting device (01) according to claim 1, **characterized in that** the slit openings (07) in the carrier plate (15) and in the adjustment plate (16) are designed in the form of elongated holes extending parallel to the bottom of the water tank (02) and arranged in multiple rows and columns, wherein all slit openings (07) have an identical height and width.

3. The sorting device (01) according to claim 2, **characterized in that** the slit openings (07) are designed semicircular on both of their ends.

4. The sorting device (01) according to claim 2 or 3, **characterized in that** the horizontal webs (08) are designed as narrow as constructively possible and the vertical webs (09) are designed wider than the horizontal webs (08).

5. The sorting device (01) according to one of preceding claims 2 to 4,
**characterized in that**
the slit openings (07) have a width of 180 mm and the vertical webs (09) have a width of 60 mm such that the effective slit openings (07e) can be continuously adjusted between 180 mm (MAX) and 60 mm (MIN).

6. The sorting device (01) according to one of preceding claims 2 to 5,
**characterized in that** the adjustment plate (16) is laterally guided on the carrier plate (15) in a continuously displaceable manner between a receptacle rail (17) and a cover rail (18) and fixed by means of at least one fixing device (19).

7. The sorting device (01) according to one of preceding claims 1 to 6,
**characterized in that** the water tank (02) is designed rectangularly and has running rails (25) on two parallel sides, wherein the carrier plate (15) is supported on said running rails in carriages (27) and can be selectively positioned along the water tank (02), and wherein the carrier plate (15) divides the water tank into the two regions (04, 05) by means of a peripheral sealing element (06) in the form of a flexible sealing apron (22).

8. The sorting device (01) according to claim 7, **characterized in that** the carrier plate (15) has two hook attachments (21) on both ends of its upper side, wherein said hook attachments engage into two split plates (29) on the two carriages (27).

9. The sorting device (01) according to claim 7 or 8, **characterized in that** the carrier plate (15) is arranged on the running rails (25) such that it can be continuously displaced.

10. The sorting device (01) according to one of the preceding claims,
**characterized in that** the grid unit (03) has multiple carrier plates (15) with respective adjustment plates (16) arranged thereon, wherein said carrier plates are arranged in the water tank (02) such that they are spaced apart from one another, and wherein the slit openings (07) are designed smaller from carrier plate (15) to carrier plate (15).

11. The sorting device (01) according to one of the preceding claims,
**characterized in that,** with respect to the one or more carrier plates (15), the one region (04) is the non-sorting region and the other region (05) is the sorting region, wherein different stimuli for attracting the fish are additionally provided in the sorting region.

12. The sorting device (01) according to claim 11, **characterized in that** the stimuli are formed by a food source (12), a light source (13) and/or a bright coloring (14).

13. The sorting device (01) according to one of the preceding claims,
**characterized in that** the carrier plates (15) and the adjustment plates (16) have a bright coloring (14) toward the one region (04) (non-sorting region) and/or a dark coloring (30) toward the other region (05) (sorting region).

14. The sorting device (01) according to one of the preceding claims,
**characterized in that** a water supply device (10) and/or a camera device (11) is arranged above the water tank (02).

## Revendications

1. Dispositif de triage (01) de poissons vivants, pourvu d'un réservoir d'eau (02) ouvert sur le dessus et d'un système grillagé (03) vertical, qui par l'intermédiaire d'un élément d'étanchéité (06) périphérique, est raccordé sur l'intérieur du réservoir d'eau (02) et divise celui-ci en deux zones (04, 05) séparées l'une de l'autre et qui comporte plusieurs orifices en fentes (07) délimités par des barrettes (08, 09) horizontales et verticales, qui par leur forme et leurs dimensions sont adaptables aux poissons qu'il convient de trier et sont susceptibles d'être fermés pour ces derniers,
**caractérisé en ce que** le système grillagé (03) comprend au moins une plaque de support (15) et au moins une plaque de réglage (16) avec une conception et un placement identiques des orifices en fentes (07) et des barrettes (08, 09) horizontales et verticales, la plaque de support (15) divisant le réservoir d'eau (02) en les deux zones (04, 05) et la plaque de réglage (16) étant placée de manière déplaçable sur la plaque de support (15) et en fonction de la position de la plaque de réglage (16), recouvrant les orifices en fentes (07) de la plaque de support (15) avec les barrettes (08, 09) horizontales et verticales de la plaque de réglage (16) et des orifices en fentes (07e) effectifs entre une valeur maximum (MAX) et une valeur minimum (MIN) étant créés, à la valeur maximum (MAX),les orifices en fentes (07e) sur la plaque de support (15) étant totalement ouverts et à la valeur minimum (MIN), étant suffisamment fermés pour empêcher le passage des poissons qu'il convient de trier.

2. Dispositif de triage (01) selon la revendication 1, **caractérisé en ce que** les orifices en fentes (07) dans la plaque de support (15) et dans la plaque de réglage (16) présentent une conception en trou oblong, à la parallèle du fond inférieur du réservoir d'eau (02) et étant placés en plusieurs rangées et colonnes, tous les orifices en fentes (07) présentant une hauteur et une largeur identiques.

3. Dispositif de triage (01) selon la revendication 2, **caractérisé en ce que** sur leurs deux extrémités, les orifices en fentes (07) sont conçus de forme semironde.

4. Dispositif de triage (01) selon la revendication 2 ou 3,
**caractérisé en ce que** les barrettes (08) horizontales sont conçues en étant aussi étroites que structurellement possible et les barrettes (09) verticales sont conçues en étant plus larges que les barrettes (08) horizontales.

5. Dispositif de triage (01) selon l'une quelconque des revendications précédentes 2 à 4,
**caractérisé en ce que**
les orifices en fentes (07) présentent une largeur de 180 mm et les barrettes (09) verticales présentent une largeur de 60 mm, de telle sorte que les orifices en fentes (07e) effectifs soient réglables en continu entre 180 mm (MAX) et 60 mm (MIN).

6. Dispositif de triage (01) selon l'une quelconque des revendications précédentes 2 à 5, **caractérisé en ce que** la plaque de réglage (16) est guidée en étant déplaçable latéralement en continu sur la plaque de support (15), entre une glissière de support (17) et une glissière de couverture (18) et est fixée au moyen d'au moins un système d'immobilisation (19).

7. Dispositif de triage (01) selon l'une quelconque des revendications précédentes 1 à 6, **caractérisé en ce que** le réservoir d'eau (02) est conçu de forme rectangulaire et comporte sur deux côtés parallèles des glissières (25) sur lesquelles la plaque de support (15) est logée dans des chariots de roulement (27) et est positionnable de manière sélectionnable le long du réservoir d'eau (02), la plaque de support (15) divisant le réservoir d'eau en deux zones(04, 05) par l'intermédiaire d'une jupe d'étanchéité (22) souple, sous la forme d'un élément d'étanchéité (06) périphérique.

8. Dispositif de triage (01) selon la revendication 7, **caractérisé en ce que** sur son côté supérieur, la plaque de support (15) comporte sur les deux extrémités des embouts en crochets (21) qui s'engagent dans deux plaques fendues (29) sur les deux chariots de roulement (27).

9. Dispositif de triage (01) selon la revendication 7 ou 8,
**caractérisé en ce que** la plaque de support (15) est placée en étant déplaçable en continu sur les glissières (25).

10. Dispositif de triage (01) selon l'une quelconque des revendications précédentes,
**caractérisé en ce que** le système grillagé (03) comporte plusieurs plaques de support (25), dont chacune est pourvue de plaques de réglage (16) placées sur le dessus, qui sont placées avec un écart mutuel dans le réservoir d'eau (02), les orifices en fentes (07) étant conçus en étant plus petits, de plaque de support (15) en plaque de support (15).

11. Dispositif de triage (01) selon l'une quelconque des revendications précédentes,
**caractérisé en ce qu'**en rapport à l'une ou aux plusieurs plaques de support (15) l'une (04) des zones est la zone de non-triage et l'autre zone (05) est la zone de triage, dans la zone de triage étant prévus additionnellement différents stimuli pour attirer les poissons.

12. Dispositif de triage (01) selon la revendication 11, **caractérisé en ce que** les stimuli sont créés par une source d'appâts (12), une source lumineuse (13) et/ou une coloration (14) claire.

13. Dispositif de triage (01) selon l'une quelconque des revendications précédentes,
**caractérisé en ce que** les plaques de support (15) et les plaques de réglage (16) donnant sur l'une (04) des zones (la zone de non-triage) comportent une coloration (14) claire et donnant sur l'autre zone (05) (la zone de triage) comportent une coloration (30) sombre.

14. Dispositif de triage (01) selon l'une quelconque des revendications précédentes,
**caractérisé en ce qu'**au-dessus du réservoir d'eau (02) est placé est système d'arrivée d'eau (10) et/ou un système de caméra (11).
